# EUROPEAN PATENT APPLICATION

(11) **EP 4 556 404 A1**
(43) Date of publication of application: **21.05.2025**
(21) Application number: 24192522.1
(22) Date of filing: 02.08.2024
(51) Int. Cl.: B65G 1/04, B65G 1/137

(54) **ARTICLE STORAGE FACILITY**

(30) Priority: 04.08.2023 JP 2023128037
(71) Applicant: DAIFUKU CO., LTD., Osaka-shi Osaka 555-0012 (JP)
(72) Inventor: UKISU, Kenichi, Tokyo, 1050022 (JP); AKAMATSU, Masaki, Tokyo, 1050022 (JP); HIRABAYASHI, Koji, Tokyo, 1050022 (JP); FUJITA, Kouji, Tokyo, 1050022 (JP)
(74) Representative: Grosse, Felix Christopher

(57) **Abstract**

An article storage facility 100 includes a first storeroom 1 and a second storeroom 2 with a lower degree of automation than the first storeroom 1. The number of first housing sections 12a in the first storeroom 1 is greater than or equal to a total number of target types, which are types of articles 9 to be stored in the first storeroom 1, out of the articles 9 of all types to be specified by order information. The number of second housing sections 21a in the second storeroom 2 is greater than the number of first housing sections 12a. A control system 10 executes an unloading process to cause the transport apparatus 4 to unload an article holder 8 holding articles 9 of the ordered type from either the first storeroom 1 or the second storeroom 2 to a retrieval work section 3 such that the first storeroom 1 is given priority over the second storeroom 2.

## Description

The present invention relates to an article storage facility for storing articles.

### Description of the Related Art

JP 2022 063 029 A discloses an example of an article storage facility. The following description of background art cites reference signs in JP 2022 063 029 A in parentheses.

The article storage facility of JP 2022 063 029 A includes a storeroom (4) in which a plurality of article holders (18) each being capable of holding a plurality of articles (20) are storable, a retrieval work section (27) for performing work to retrieve articles (20) from the article holders (18), and a transport device (6) configured to transport the article holders (18) between the storeroom (4) and the retrieval work section (27).

### Summary of the invention

The storeroom (4) of the article storage facility of JP 2022 063 029 A is equipped with a plurality of storage racks (10a to 10f) and a plurality of stacker cranes (12a to 12c) that are controlled by a control system (8) such that each stacker crane transfers the article holders (18) to a corresponding storage rack. The above article storage facility increases the operational efficiency by thus automating work of loading and unloading the article holders (18) throughout the storeroom (4).

However, the entire storeroom (4) being automated, as mentioned above, is a disadvantage in terms of high installation costs of the article storage facility. It is conceivable to reduce the facility costs by reducing the degree of automation in part of the storeroom (4), such as having a worker manually perform the work of loading and unloading the article holders (18). However, this configuration is likely to reduce the operational efficiency of the article storage facility.

It is desirable to realize an article storage facility capable of increasing the operational efficiency while keeping the installation costs low.

A characteristic configuration of an article storage facility in view of the foregoing lies in:
an article storage facility including:
   a first storeroom in which a plurality of article holders are storable, each of the article holders being capable of holding a plurality of articles;
   a second storeroom in which the plurality of article holders are storable, the second storeroom having a lower degree of automation than the first storeroom;
   a retrieval work section for retrieval work to be performed, the retrieval work being work of retrieving an ordered number of the articles of an ordered type from corresponding one or more of the plurality of article holders, the ordered type being an article type specified by order information, the ordered number being the number of articles of the ordered type and specified by the order information;
   a transport apparatus configured to transport the plurality of article holders between the first storeroom and the retrieval work section and between the second storeroom and the retrieval work section; and a control system configured to control the first storeroom, the second storeroom, and the transport apparatus, based on the order information,
   wherein each of the plurality of article holders is configured to hold a single type of the articles,
   the first storeroom includes a plurality of first housing sections capable of housing the article holders; the second storeroom includes a plurality of second housing sections capable of housing the article holders;
   the number of the first housing sections is greater than or equal to a total number of target types, the target types being types of the articles to be stored in the first storeroom out of all types of the articles to be specified by the order information,
   the number of the second housing sections is greater than the number of the first housing sections, and the control system is configured to execute an unloading process to cause, in response to accepting the order information, the transport apparatus to unload at least one of the article holders holding one or more of the articles of the ordered type from either the first storeroom or the second storeroom and transport the at least one of the article holders to the retrieval work section such that the first storeroom is given priority over the second storeroom.

According to this characteristic configuration, the article holders stored in the first storeroom are unloaded with priority in the unloading process. With this, the first storeroom having a higher degree of automation than the second storeroom can be operated with priority. The operational efficiency of the article storage facility can thus be increased.

Further, according to this characteristic configuration, the degree of automation in the second storeroom with a lower frequency of unloading article holders is lower than that of the first storeroom, and the number of second housing sections in the second storeroom is greater than the number of first housing sections in the first storeroom. This can keep the degree of automation in the entire article storage facility low while maintaining the operational efficiency of the article storage facility. Thus, the installation costs of the article storage facility can be kept low.

### Brief description of the drawings

- Fig. 1: shows one floor of a building in which an article storage facility according to an embodiment is installed;
- Fig. 2: shows another floor of the building in which the article storage facility according to the embodiment is installed;
- Fig. 3: is a control block diagram of the article storage facility according to the embodiment;
- Fig. 4: illustrates an example of a first unloading process and a post-work loading process;
- Fig. 5: illustrates an example of the first unloading process, a second unloading process, the post-work loading process, and an empty holder storing process;
- Fig. 6: is a flowchart illustrating an example of the first unloading process, the second unloading process, the post-work loading process, and the empty holder storing process;
- Fig. 7: illustrates an example of a new holder loading process; and
- Fig. 8: illustrates an example of the new holder loading process.

### Detailed description of preferred embodiments

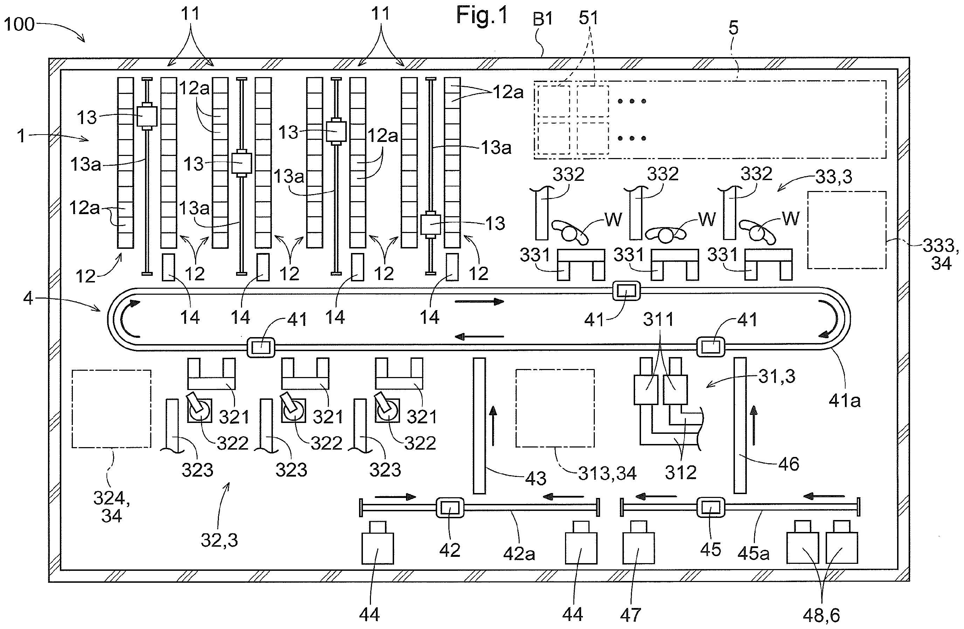

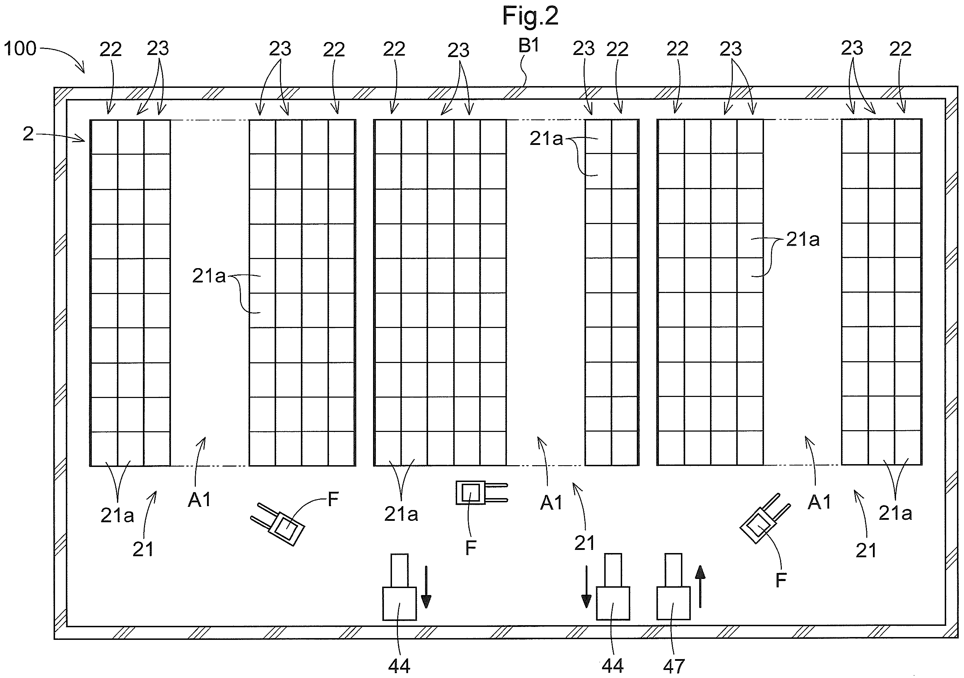

Hereinafter, an article storage facility 100 according to an embodiment will be described with reference to the drawings. The article storage facility 100 includes a first storeroom 1, a second storeroom 2, a retrieval work section 3, and a transport apparatus 4, as shown in Figs. 1 and 2.

The article storage facility 100 of the present embodiment is installed in a building B1 having a plurality of floors. The first storeroom 1 of the present embodiment is installed in a second-floor part of the building B1. The second storeroom 2 is installed in a third-floor part of the building B1. That is, the first storeroom 1 and the second storeroom 2 of the present embodiment are installed on different floors in the vertical direction. The retrieval work section 3 of the present embodiment is installed in the second-floor part of the building B1. That is, the retrieval work section 3 of the present embodiment is located on the floor where the first storeroom 1 is installed.

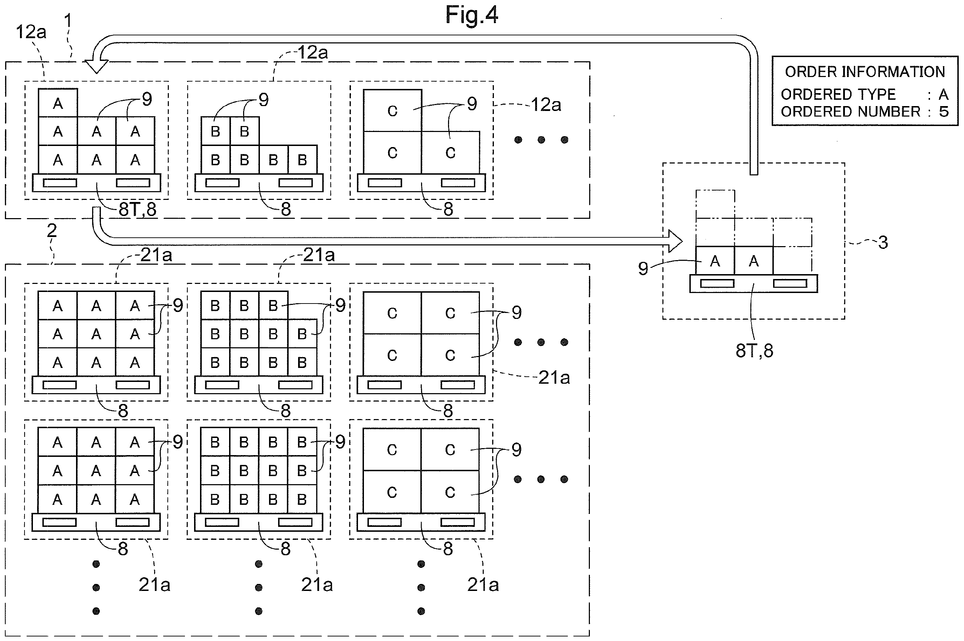

The first storeroom 1 and the second storeroom 2 can each store a plurality of article holders 8 (see Fig. 4 and other figures).

The first storeroom 1 of the present embodiment includes a plurality of automated storage systems 11, as shown in Fig. 1. Each of the storage systems 11 includes a pair of first storage racks 12, each of which is capable of storing a plurality of article holders 8, and a stacker crane 13 that moves along a travel rail 13a and transports the article holders 8.

The two first storage racks 12 face each other with the travel rail 13a therebetween. Each of the two first storage racks 12 includes a plurality of first housing sections 12a. Each of the first housing sections 12a can house an article holder 8. The plurality of first housing sections 12a are arranged next to each other along the travel rail 13a and in the vertical direction.

The stacker crane 13 receives an article holder 8 from a loading/unloading conveyor 14 and places the received article holder 8 in a predetermined first housing section 12a. Further, the stacker crane 13 retrieves an article holder 8 from a predetermined first housing section 12a and places the retrieved article holder 8 on the loading/unloading conveyor 14.

The loading/unloading conveyor 14 can transport an article holder 8 between a location at which the article holder 8 is delivered to and from the stacker crane 13 and a location at which the article holder 8 is delivered to and from the transport apparatus 4.

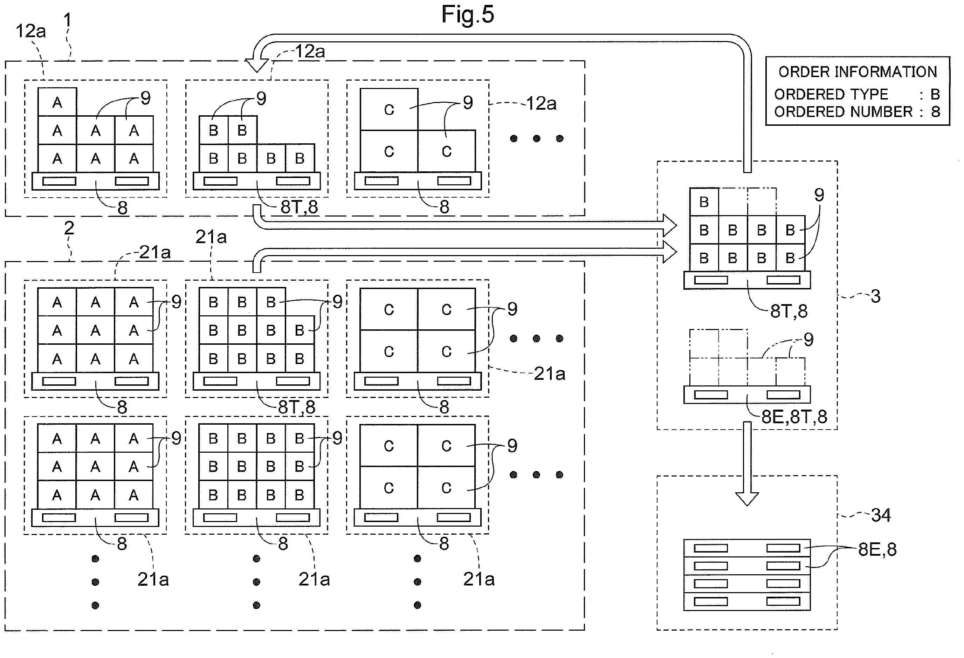

Each of the article holders 8 can hold a plurality of articles 9, as shown in Fig. 4. Articles 9 of one type are held by each of the article holders 8. Each article holder 8 of the present embodiment is a pallet on which a plurality of articles 9 are placed. Note that an alphabetical letter given to each article 9 in Fig. 4 indicates the type of article 9. The same applies to Fig. 5 and other figures.

Each article holder 8 can hold up to a specific holdable number of articles 9 that is predetermined for each type of article 9. In this example, each article holder 8 can hold up to nine articles 9 of type A, up to 12 articles 9 of type B, and up to four articles 9 of type C. It is assumed in Fig. 4 that no article 9 other than those shown therein is present in the sheet-depth direction in Fig. 4 for convenience of description. The same applies to Fig. 5 and other figures.

Retrieval work, i.e., retrieving an ordered number of articles 9 of an ordered type from an article holder 8, is performed in the retrieval work section 3. Here, the "ordered type" refers to the type of article 9 specified by order information. The "ordered number" refers to the number of articles 9 of the ordered type that is specified by order information.

The first storeroom 1 may store all types of articles 9 to be specified by order information, or may store some of all types of articles 9 to be specified by order information. In the following, types of articles 9 to be stored in the first storeroom 1 out of all types of articles 9 to be specified by order information are referred to as "target types".

The number of first housing sections 12a included in the first storeroom 1 is set to be greater than or equal to the total number of target types. At least one article holder 8 is stored for one target type in the first storeroom 1. That is, at least one first housing section 12a corresponds to one target type. In the present embodiment, the number of first housing sections 12a is set to be equal to the total number of target types. Further, one article holder 8 is stored for one target type in the first storeroom 1. That is, the first housing sections 12a house the article holders 8 such that a different type of article 9 is housed in each of the first housing sections 12a. Thus, in the present embodiment, one first housing section 12a corresponds to one target type.

The transport apparatus 4 is a device that transports the article holders 8 between the first storeroom 1 and the retrieval work section 3, and between the second storeroom 2 and the retrieval work section 3, as shown in Fig. 1. The transport apparatus 4 of the present embodiment includes a plurality of circulating transport carriages 41, a first transport carriage 42, a first connecting conveyor 43, a pair of first lift devices 44, a second transport carriage 45, a second connecting conveyor 46, a second lift device 47, and a pair of third lift devices 48.

Each of the circulating transport carriages 41 can travel along a loop-shaped circulating rail 41a. Each of the circulating transport carriages 41 can transport an article holder 8. Each of the circulating transport carriages 41 can deliver and receive an article holder 8 to and from any of the loading/unloading conveyors 14.

The first transport carriage 42 can travel along a linear first rail 42a. The first transport carriage 42 can transport an article holder 8.

The first connecting conveyor 43 is a conveyor connecting the circulating rail 41a to the first rail 42a. The first connecting conveyor 43 transports an article holder 8 delivered from the first transport carriage 42 to the circulating rail 41a. Each circulating transport carriage 41 receives an article holder 8 from the first connecting conveyor 43. The first connecting conveyor 43 of the present embodiment has a linear shape. The first connecting conveyor 43 is perpendicular to the first rail 42a so as to be connected to a central portion of the first rail 42a in the extension direction thereof.

Each of the two first lift devices 44 is a device that transports an article holder 8 in the vertical direction between different floors. Each of the two first lift devices 44 of the present embodiment lifts an article holder 8 between the second-floor part (see Fig. 1) and the third-floor part (see Fig. 2) of the building B1.

Each of the two first lift devices 44 is adjacent to the first rail 42a so as to be able to deliver and receive an article holder 8 to and from the first transport carriage 42. Each of the two first lift devices 44 of the present embodiment transports an article holder 8 from the third-floor part to the second-floor part of the building B1. The article holder 8 transported from the third-floor part to the second-floor part of the building B1 by the first lift device 44 is delivered to the first transport carriage 42. Further, the two first lift devices 44 of the present embodiment are adjacent to the respective ends of the first rail 42a.

The second transport carriage 45 can travel along a linear second rail 45a. The second transport carriage 45 can transport an article holder 8.

The second connecting conveyor 46 is a conveyor connecting the circulating rail 41a to the second rail 45a. The second connecting conveyor 46 transports the article holder 8 delivered from the second transport carriage 45 to the circulating rail 41a. A circulating transport carriage 41 receives the article holder 8 from the second connecting conveyor 46. The second connecting conveyor 46 of the present embodiment has a linear shape. The second connecting conveyor 46 is perpendicular to the second rail 45a so as to be connected to a central portion of the second rail 45a in the extension direction thereof.

The second lift device 47 is a device that transports an article holder 8 in the vertical direction between different floors. The second lift device 47 of the present embodiment lifts the article holder 8 between the second-floor part (see Fig. 1) and the third-floor part (see Fig. 2) of the building B1.

The second lift device 47 is adjacent to the second rail 45a so as to be able to deliver and receive the article holder 8 to and from the second transport carriage 45. In the present embodiment, the article holder 8 transported by the second transport carriage 45 is delivered to the second lift device 47. The second lift device 47 then transports the article holder 8 from the second-floor part to the third-floor part of the building B1. Further, the second lift device 47 of the present embodiment is adjacent to one end of the second rail 45a.

Each of the two third lift devices 48 is a device that transports an article holder 8 in the vertical direction between different floors. Each of the two third lift devices 48 of the present embodiment lifts an article holder 8 between the second-floor part (see Fig. 1) and a first-floor part (not shown) of the building B1. In the present embodiment, work of loading and unloading article holders 8 into and from the article storage facility 100 is performed in the first-floor part of the building B1.

Each of the two third lift devices 48 is adjacent to the second rail 45a so as to be able to deliver and receive an article holder 8 to and from the second transport carriage 45. Each of the two third lift devices 48 of the present embodiment transports an article holder 8 from the first-floor part to the second-floor part of the building B1. The article holder 8 transported from the first-floor part to the second-floor part of the building B1 by the third lift device 48 is delivered to the second transport carriage 45. The two third lift devices 48 of the present embodiment are adjacent to each other and adjacent to the other end of the second rail 45a.

The retrieval work section 3 of the present embodiment includes a first work section 31, a second work section 32, and a third work section 33.

The first work section 31 is designed for work on articles 9 that are stacked in a relatively stable posture over a plurality of layers. The first work section 31 is equipped with a plurality of layer depalletizers 311.

Each of the layer depalletizers 311 performs retrieval work to receive an article holder 8 from the circulating transport carriage 41 and retrieve the ordered number of articles 9 of the ordered type from the article holder 8. Further, each of the layer depalletizers 311 delivers an article holder 8 for which the retrieval work has been completed to the circulating transport carriage 41. Each of the layer depalletizers 311 can collectively retrieve articles 9 for one layer from an article holder 8.

In the present embodiment, the articles 9 retrieved by the layer depalletizers 311 are delivered to first sorting conveyors 312 located adjacent to the respective layer depalletizers 311. Each of the first sorting conveyors 312 transports the articles 9 delivered by the corresponding layer depalletizer 311 to a sorting work section (not shown), which is located in the first-floor part of the building B1 and where sorting work is performed.

In the present embodiment, a first empty holder storage section 313 is provided in a region adjacent to a downstream part of the circulating rail 41a in the direction in which the article holders 8 are transported, relative to the first work section 31. The first empty holder storage section 313 can store article holders 8 that are no longer holding articles 9 after the completion of the retrieval work for the article holders 8 in the first work section 31.

The second work section 32 is designed for work on articles 9 that cannot be handled in the first work section 31 (e.g., in a case of retrieving a smaller number of articles 9 than the number of articles 9 constituting one layer when the articles 9 are stacked over a plurality of layers). The second work section 32 is equipped with a plurality of first picking conveyors 321 and a plurality of picking robots 322. The number of first picking conveyors 321 is equal to the number of picking robots 322, and the first picking conveyors 321 and the picking robots 322 are in one-to-one correspondence.

Each of the first picking conveyors 321 receives an article holder 8 from the circulating transport carriage 41 and transports the received article holder 8 to the corresponding picking robot 322. Each of the picking robots 322 performs retrieval work to retrieve the ordered number of articles 9 of the ordered type from the article holder 8 transported by the corresponding first picking conveyor 321.

In the present embodiment, the articles 9 retrieved by the picking robots 322 are delivered to second sorting conveyors 323 adjacent to the respective picking robots 322. Each of the second sorting conveyors 323 transports the articles 9 retrieved by the corresponding picking robot 322 to the sorting work section (not shown) that is located in the first-floor part of the building B1 and where sorting work is performed.

Further, each of the first picking conveyors 321 delivers, to the circulating transport carriage 41, the article holder 8 for which the retrieval work has been completed by the corresponding picking robot 322.

In the present embodiment, a second empty holder storage section 324 is provided in a region adjacent to a downstream part of the circulating rail 41a in the direction in which the article holders 8 are transported, relative to the second work section 32. The second empty holder storage section 324 can store article holders 8 that are no longer holding articles 9 after completion of the retrieval work for the article holders 8 in the second work section 32.

The third work section 33 is designed for work on articles 9 that cannot be handled in the first work section 31 or the second work section 32 (e.g., when a plurality of articles 9 are stacked in an unstable posture, or when a plurality of articles 9 are tied together). The third work section 33 includes a plurality of second picking conveyors 331. In the third work section 33, workers W who perform retrieval work are placed in correspondence with the respective second picking conveyors 331.

Each of the second picking conveyors 331 receives an article holder 8 from the circulating transport carriage 41 and transports the received article holder 8 to the corresponding worker W. The worker W performs retrieval work to retrieve the ordered number of articles 9 of the ordered type from the article holder 8 transported by the corresponding second picking conveyor 331.

In the present embodiment, the articles 9 retrieved by the workers W are delivered to third sorting conveyors 332 adjacent to the respective workers W. Each of the third sorting conveyors 332 transports the article 9 retrieved by the corresponding worker W to the sorting work section (not shown) that is located in the first-floor part of the building B1 and where sorting work is performed.

Further, each of the second picking conveyors 331 delivers an article holder 8 for which the retrieval work has been completed by the corresponding worker W to the circulating transport carriage 41.

In the present embodiment, a third empty holder storage section 333 is provided in a region adjacent to a downstream part of the circulating rail 41a in the direction in which the article holders 8 are transported, relative to the third work section 33. The third empty holder storage section 333 can store article holders 8 that are no longer holding articles 9 after completion of the retrieval work for the article holders 8 in the third work section 33.

The second storeroom 2 of the present embodiment includes a plurality of second storage racks 21, as shown in Fig. 2. Each of the second storage racks 21 includes a plurality of second housing sections 21a. Each of the second housing sections 21a can house an article holder 8.

Each of the second storage racks 21 of the present embodiment includes a pair of fixed racks 22 and a plurality of mobile racks 23.

Each of the two fixed racks 22 includes a plurality of second housing sections 21a that are arranged in a fixed direction as viewed in the vertical direction, and also arranged in the vertical direction. Each of the mobile racks 23 includes a plurality of second housing sections 21a that are arranged in the same arrangement direction of the second housing sections 21a in the fixed racks 22 as viewed in the vertical direction, and also arranged in the vertical direction.

The two fixed racks 22 are spaced apart from each other in a direction perpendicular to the arrangement direction of the second housing sections 21a as viewed in the vertical direction. The plurality of mobile racks 23 are arranged between the two fixed racks 22. The mobile racks 23 are arranged in a direction perpendicularto the arrangement direction of the second housing sections 21a as viewed in the vertical direction. The mobile racks 23 can move in the arrangement direction of the mobile racks 23. A travel path A1 for forklifts F operated by workers is formed between two adjacent mobile racks 23 or between a fixed rack 22 and an adjacent mobile rack 23 by moving some or all of the mobile racks 23.

In the present embodiment, predetermined mobile racks 23 are moved by a worker operating an operation panel so as to form a desired travel path A1. An article holder 8 is transported by the forklift F operated by the worker between a predetermined second housing section 21a and one of the two first lift devices 44 or the second lift device 47. The second storeroom 2 thus has a lower degree of automation than the first storeroom 1.

Here, the "degree of automation" of each storeroom is determined based on the number of automatic transport devices (e.g., stacker cranes 13 etc.) that are included in the storeroom and automatically transport article holders 8 between the housing sections and the transport apparatus 4, as well as based on the installation status of those automatic transport devices, for example. The "degree of automation" of each storeroom may be, for example, the proportion of the transport distance of the automatic transport devices to the total transport distance for article holders 8 in the storeroom, or the proportion of the number of automatic transport devices to the storage capacity of the storeroom (e.g., the proportion of the number of automatic transport devices to the number of housing sections included in the storeroom, or the proportion of the number of automatic transport devices to the volume value of the storeroom), or may simply be the number of automatic transport devices included in the storeroom. In the present embodiment, the first storeroom 1 is equipped with a plurality of stacker cranes 13, each of which serves as an automatic transport device. Meanwhile, the second storeroom 2 is equipped with the forklifts F operated by workers but is not equipped with an automatic transport device such as a stacker crane. Therefore, if any of the above scales is used as the "degree of automation" of each storeroom, the degree of automation in the first storeroom is expressed by a positive number, while the degree of automation in the second storeroom is zero. Thus, the degree of automation in the second storeroom 2 is lower than the degree of automation in the first storeroom 1.

The number of second housing sections 21a in the second storeroom 2 is greater than the number of first housing sections 12a in the first storeroom 1. The second storeroom 2 of the present embodiment stores a greater number of article holders 8 per unit volume than the first storeroom 1.

The article storage facility 100 of the present embodiment also includes a third storeroom 5, as shown in Fig. 1. The third storeroom 5 can store a plurality of article holders 8. The third storeroom 5 of the present embodiment is installed in the second-floor part of the building B1. That is, the third storeroom 5 of the present embodiment is provided on the floor where the first storeroom 1 is installed.

The third storeroom 5 includes a plurality of placement sections 51. A plurality of article holders 8 can be laid flat on each of the placement sections 51. That is, each of the placement sections 51 is constituted by the floor surface of the building B1.

In the present embodiment, work of loading and unloading article holders 8 to and from the third storeroom 5 is performed manually by workers using forklifts F or the like. Thus, the third storeroom 5 has a lower degree of automation than the second storeroom 2.

In the present embodiment, among the article holders 8 unloaded from the second storeroom 2, article holders 8 holding articles 9 of some of the types to be specified by the order information are stored in the first storeroom 1, and article holders 8 holding the remaining types of articles 9 are stored in the third storeroom 5. That is, the target types of the present embodiment are some of the types of articles 9 that are to be specified by the order information.

As described above, the first storeroom 1 stores article holders 8 holding articles of the target types such that at least one first housing section 12a corresponds to one of the target types. In the present embodiment, the retrieval number per unit period of the articles 9 of the target types is greater than or equal to a predetermined reference value. Further, the third storeroom 5 stores article holders 8 holding articles 9 whose retrieval number per unit period is smaller than the aforementioned reference value. Here, the "retrieval number per unit period" refers to the number of articles 9 retrieved per unit period in the retrieval work section 3. Thus, in the present embodiment, the first storeroom 1 stores the article holders 8 holding articles 9 that are unloaded relatively frequently, and the third storeroom 3 stores the article holders 8 holding articles 9 that are unloaded relatively infrequently.

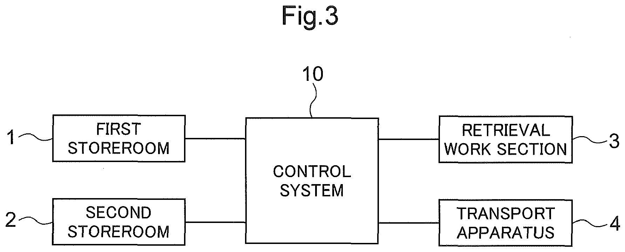

The article storage facility 100 includes a control system 10 that controls the first storeroom 1, the second storeroom 2, and the transport apparatus 4 based on order information, as shown in Fig. 3.

In the present embodiment, the control of the first storeroom 1 performed by the control system 10 includes control of operation of the stacker cranes 13 and the loading/unloading conveyors 14, and management of the number of article holders 8 stored in the first housing sections 12a and the types and number of articles 9 held by the article holders 8. The control of the second storeroom 2 performed by the control system 10 includes output of work instructions (e.g., displaying the work instructions on tablet terminals held by the workers) regarding operation of the forklifts F performed by the workers and operation to move the mobile racks 23 performed by the workers, and management of the number of article holders 8 stored in the second housing sections 21a and the types and number of articles 9 held by the article holders 8. The control of the transport apparatus 4 performed by the control system 10 includes control of operation of the circulating transport carriages 41, the first transport carriage 42, the first connecting conveyor 43, the first lift devices 44, the second transport carriage 45, the second connecting conveyor 46, the second lift device 47, and the third lift devices 48.

The control system 10 of the present embodiment also controls the retrieval work section 3 based on order information. The control of the retrieval work section 3 performed by the control system 10 includes control of operation of the layer depalletizers 311, the first sorting conveyors 312, the first picking conveyors 321, the picking robots 322, the second sorting conveyors 323, the second picking conveyors 331, and the third sorting conveyors 332.

The control system 10 executes a first unloading process, a second unloading process, and a post-work loading process.

As shown in Fig. 4, the first unloading process is a process of causing, in response to the control system 10 accepting order information, the transport apparatus 4 to unload a target holder 8T, which is an article holder 8 holding articles 9 of the ordered type, from the first storeroom 1 and to transport the target holder 8T to the retrieval work section 3.

In the first unloading process of the present embodiment, the target holder 8T is retrieved from a predetermined first housing section 12a in the first storage rack 12 and placed on the corresponding loading/unloading conveyor 14 by the stacker crane 13. The target holder 8T placed on the loading/unloading conveyor 14 and transported in the unloading direction is received by the circulating transport carriage 41 and thereafter transported to any of the first work section 31, the second work section 32, and the third work section 33 of the retrieval work section 3 depending on, for example, the state of the plurality of articles 9 held by the target holder 8T (see Fig. 1).

As shown in Fig. 4, the post-work loading process is control performed to cause the transport apparatus 4 to transport the target holder 8T to the first storeroom 1 if any article 9 remains in the target holder 8T after the completion of the retrieval work for the target holder 8T in the retrieval work section 3.

In the post-work loading process of the present embodiment, the target holder 8T in which any article 9 remains after the completion of the retrieval work is received by the circulating transport carriage 41 and thereafter transported to the first storeroom 1. Then, the target holder 8T transported to the first storeroom 1 by the circulating transport carriage 41 is placed on the loading/unloading conveyor 14 and transported in the loading direction, thereafter received by the stacker crane 13, and stored in a predetermined first housing section 12a in the first storage rack 12 (see Fig. 1).

The second unloading process is a process of causing the transport apparatus 4 to unload the target holder 8T from the second storeroom 2 and transport the target holder 8T to the retrieval work section 3 if the number of articles 9 held by the target holder 8T unloaded in the first unloading process is smaller than the ordered number, or if the target holder 8T is not present in the first storeroom 1, as shown in Fig. 5. The control system 10 thus performs control to unload the target holder 8T preferentially from the first storeroom 1 over the second storeroom 2. Fig. 5 shows, as an example of the second unloading process, a process of unloading the target holder 8T from the second storeroom 2 and transporting the target holder 8T to the retrieval work section 3 if the number of (here, six) articles 9 (here, articles 9 of type B) held by the target holder 8T unloaded in the first unloading process is smaller than the ordered number (here, eight).

Thus, the control system 10 executes the first unloading process to unload the target holder 8T from the first storeroom 1. If the number of articles 9 held by the target holder 8T unloaded in the first unloading process is smaller than the ordered number, or if the target holder 8T is not present in the first storeroom 1, the control system 10 executes the second unloading process to unload the target holder 8T from the second storeroom 2. That is, the control system 10 performs, in response to accepting the order information, a "loading process" to cause the transport apparatus 4 to unload an article holder 8 (target holder 8T) holding articles 9 of the ordered type from either the first storeroom 1 or the second storeroom 2 and transport the unloaded article holder 8 to the retrieval work section 3 such that the first storeroom 1 is given priority over the second storeroom 2.

In the second unloading process of the present embodiment, the target holder 8T that has been transported by the forklift F operated by the worker from a predetermined second housing section 21a in the second storage racks 21 to one of the two first lift devices 44 is transported from the third-floor part to the second-floor part of the building B1 by the first lift device 44 (see Fig. 2). The target holder 8T transported to the second-floor part of the building B1 by the first lift device 44 is received by the first transport carriage 42 and transported to the first connecting conveyor 43. The target holder 8T transported to the first connecting conveyor 43 by the first transport carriage 42 is transported to the circulating rail 41a by the first connecting conveyor 43 and received by the circulating transport carriage 41. The target holder 8T received by the circulating transport carriage 41 is transported to any of the first work section 31, the second work section 32, and the third work section 33 of the retrieval work section 3 depending on, for example, the state of the plurality of articles 9 held by the target holder 8T (see Fig. 1).

In the second unloading process of the present embodiment, if a target holder 8T holding articles 9 whose number is smaller than the specific holdable number is present in the second storeroom 2, the control system 10 causes the transport apparatus 4 to unload this target holder 8T and transport the target holder 8T to the retrieval work section 3, as shown in Fig. 5. In the example shown in Fig. 5, a target holder 8T holding articles 9 (here, articles 9 of type B) whose number is smaller than the specific holdable number (here, 12) is present in the second storeroom 2, and this target holder 8T is transported to the retrieval work section 3.

The control system 10 of the present embodiment also executes an empty holder storing process. The empty holder storing process is control in which, if the target holder 8T becomes an empty holder 8E, i.e., an article holder 8 that does not hold any article 9, after the completion of the retrieval work for the target holder 8T in the retrieval work section 3, the transport apparatus 4 transports this empty holder 8E to a predetermined empty holder storage section 34, as shown in Fig. 5. The empty holder storage section 34 includes a first empty holder storage section 313, a second empty holder storage section 324, and a third empty holder storage section 333 (see Fig. 1).

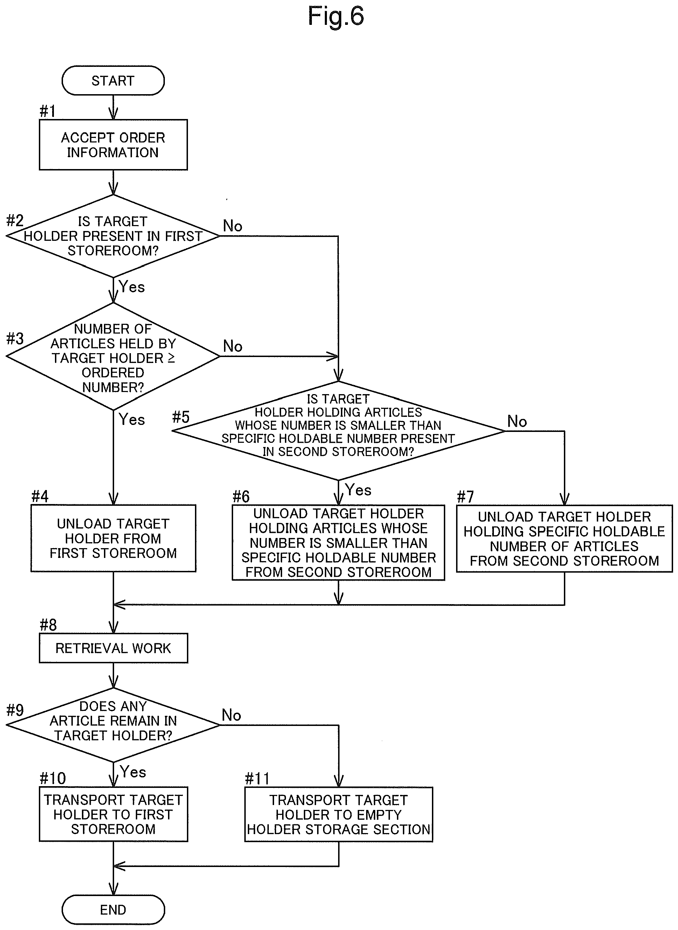

Fig. 6 shows a flowchart illustrating an example of the first unloading process, the second unloading process, the post-work loading process, and the empty holder storing process performed by the control system 10.

First, the control system 10 accepts order information that contains the ordered type and the ordered number (step #1), as shown in Fig. 6.

In response to accepting the order information, the control system 10 determines whether the target holder 8T, which is an article holder 8 holding articles 9 of the ordered type, is present in the first storeroom 1 (step #2). If the target holder 8T is present in the first storeroom 1 (step #2: Yes), the control system 10 determines whether the number of articles 9 held by the target holder 8T is greater than or equal to the ordered number (step #3).

If the number of articles 9 held by the target holder 8T is greater than or equal to the ordered number (step #3: Yes), the control system 10 causes the transport apparatus 4 to unload the target holder 8T from the first storeroom 1 and transport the target holder 8T to the retrieval work section 3 (step #4).

On the other hand, if the target holder 8T is not present in the first storeroom 1 (step #2: No), or if the number of articles 9 held by the target holder 8T is smaller than the ordered number (step #3: No), the control system 10 determines whether a target holder 8T holding articles 9 whose number is smaller than the specific holdable number is present in the second storeroom 2 (step #5).

If a target holder 8T holding articles 9 whose number is smaller than the specific holdable number is present in the second storeroom 2 (step #5: Yes), the control system 10 causes the transport apparatus 4 to unload this target holder 8T and transport the target holder 8T to the retrieval work section 3 (step #6).

On the other hand, if a target holder 8T holding articles 9 whose number is smaller than the specific holdable number is not present in the second storeroom 2 (step #5: No), the control system 10 causes the transport apparatus 4 to unload a target holder 8T holding the specific holdable number of articles 9 and transport this target holder 8T to the retrieval work section 3 (step #7).

The control system 10 controls the retrieval work section 3 so as to perform retrieval work for the target holder 8T transported to the retrieval work section 3 (step #8). In this example, if the target holder 8T is transported to the first work section 31 of the retrieval work section 3, the control system 10 causes the layer depalletizer 311 to perform the retrieval work for the target holder 8T. If the target holder 8T is transported to the second work section 32 of the retrieval work section 3, the control system 10 causes the picking robot 322 to perform the retrieval work for the target holder 8T.

The control system 10 determines whether any article 9 remains in the target holder 8T after the completion of the retrieval work for the target holder 8T in the retrieval work section 3 (step #9).

If any article 9 remains in the target holder 8T after the completion of the retrieval work for the target holder 8T in the retrieval work section 3 (step #9: Yes), the control system 10 causes the transport apparatus 4 to transport the target holder 8T to the first storeroom 1 (step #10).

On the other hand, if no article 9 remains in the target holder 8T after the completion of the retrieval work for the target holder 8T in the retrieval work section 3 (step #9: No), the control system 10 causes the transport apparatus 4 to transport the target holder 8T, i.e., the empty holder 8E, to the empty holder storage section 34 (step #11).

In this example, the above steps #1 and #4 correspond to the first unloading process. The above steps #2 to #3 and #5 to #7 correspond to the second unloading process. The above steps #9 and #10 correspond to the post-work loading process. The above steps #9 and #11 correspond to the empty holder storing process.

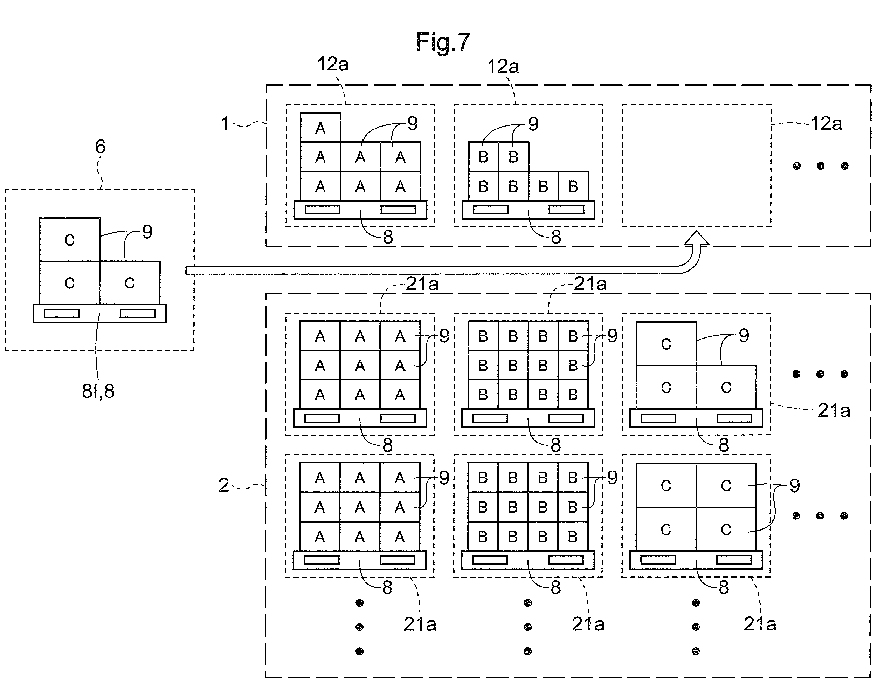

The article storage facility 100 of the present embodiment also includes a loading section 6 that accepts an article holder 8 holding at least one article 9, as shown in Fig. 7. The transport apparatus 4 also transports article holders 8 between the first storeroom 1 and the loading section 6 and between the second storeroom 2 and the loading section 6. In the present embodiment, the pair of third lift devices 48 functions as the loading section 6 and transports article holders 8 from the first-floor part (not shown) of the building B1, where work of loading the article holders 8 to the article storage facility 100 is performed, to the second-floor part (see Fig. 1) of the building B1.

The control system 10 of the present embodiment also executes a new holder loading process to load a loaded holder 8I, which is an article holder 8 accepted by the loading section 6, into either the first storeroom 1 or the second storeroom 2.

In the new holder loading process, the transport apparatus 4 loads the loaded holder 8I into the first storeroom 1 if the loaded holder 8I holds articles 9 whose number is smaller than the specific holdable number, and if no article 9 of the same type as the articles 9 held by the loaded holder 8I is present in the first storeroom 1, as shown in Fig. 7.

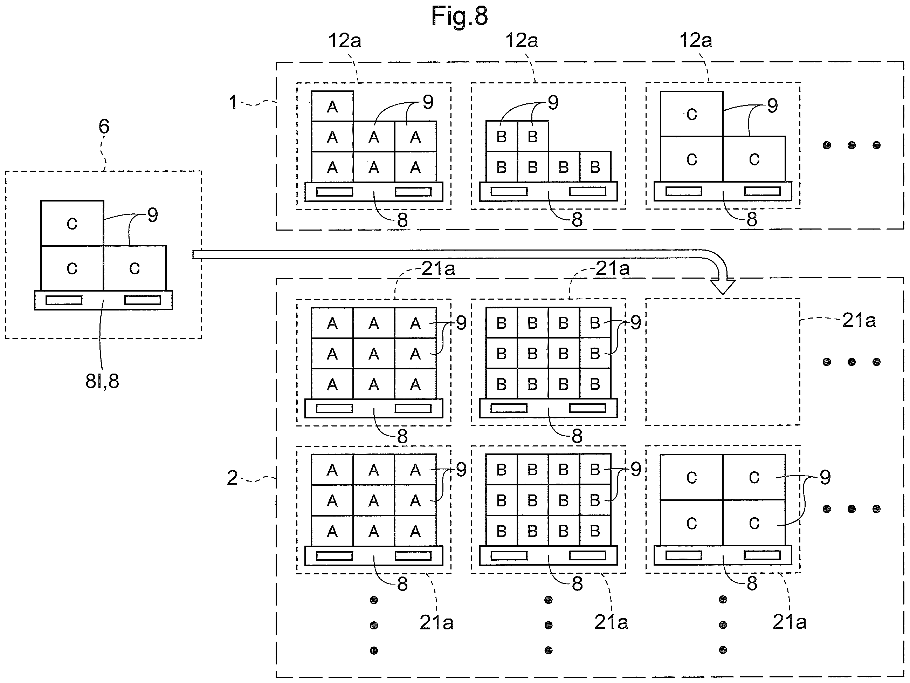

In the new holder loading process, the transport apparatus 4 loads the loaded holder 8I into the second storeroom 2 if the loaded holder 8I holds articles 9 whose number is smaller than the specific holdable number and if articles 9 of the same type as the articles 9 held by the loaded holder 8I are present in the first storeroom 1, or if the loaded holder 8I holds the specific holdable number of articles 9, as shown in Fig. 8. Fig. 8 shows, as an example of the new holder loading process, a process of loading the loaded holder 8I into the second storeroom 2 if the loaded holder 8I holds articles 9 (here, three articles 9 of type C) whose number is smaller than the specific holdable number (here, four), and if articles 9 of the same type as the articles 9 held by the loaded holder 8I are present in the first storeroom 1.

### Other Embodiments

(1) In the example described in the above embodiment, the number of first housing sections 12a is equal to the total number of target types. However, there is no limitation to this configuration. The number of first housing sections may alternatively be equal to a number obtained by adding up adjustment numbers N (N is a natural number) for all of the target types. Here, the "adjustment number N (N is a natural number)" is a number that is predetermined for each target type, and increases with a decrease in the specific holdable number (the number of articles 9 that can be held by each article holder 8 and is predetermined for each type of article 9) for the article holder 8, and also increases with an increase in the retrieval number per unit period (the number of articles 9 retrieved per unit period in the retrieval work section 3). For example, if the number of articles 9 of type A unloaded per day is 100, and the specific holdable number of the articles 9 of type A is 50, two article holders 8 are needed per day. Thus, it is preferable to set the adjustment number N for this type of article 9 to two. If the number of articles 9 of type B per day is 200, and the specific holdable number of the articles 9 of type B is 20, 10 article holders 8 are needed per day. Thus, it is preferable to set the appropriate adjustment number N for this type of article 9 to 10. Note that it is preferable to perform rounding as appropriate to make the adjustment number a natural number.
(2) In the example described in the above embodiment, the first storeroom 1 is installed in the second-floor part of the building B1, and the second storeroom 2 is installed in the third-floor part of the building B1. However, there is no limitation to this configuration. At least eitherthe first storeroom 1 or the second storeroom 2 may be installed over more than one floor. For example, the second storeroom 2 may be installed in a fourth-floor part and a fifth-floor part of the building B1 in addition to the third-floor part of the building B1.
(3) In the example described in the above embodiment, each article holder 8 is a pallet on which a plurality of articles 9 are placed. However, there is no limitation to this configuration. Each article holder 8 may alternatively be a collapsible container, carton, or the like, in which a plurality of articles 9 are housed.
(4) In the example described in the above embodiment, the first storeroom 1 is equipped with the stacker cranes 13. However, there is no limitation to this configuration. The first storeroom 1 may alternatively be equipped with any devices that are other than the stacker cranes 13 and can move article holders 8 to and from any first housing sections 12a.
(5) In the example described in the above embodiment, the second storeroom 2 is equipped with the fixed racks 22 and the mobile racks 23. However, there is no limitation to this configuration. The second storeroom 2 may alternatively be equipped with only either the fixed racks 22 or the mobile racks 23. Alternatively, the second storeroom 2 may be configured such that article holders 8 can be laid flat as in the third storeroom 5.
(6) In the example described in the above embodiment, the retrieval work section 3 includes the first work section 31, the second work section 32, and the third work section 33. However, there is no limitation to this configuration. The retrieval work section 3 may alternatively include only one or two of the first work section 31, the second work section 32, and the third work section 33.
(7) In the example described in the above embodiment, the post-work loading process is control for causing the transport apparatus 4 to transport the target holder 8T to the first storeroom 1 if any article 9 remains in the target holder 8T after the completion of the retrieval work for the target holder 8T in the retrieval work section 3. Here, there are cases where no article 9 remains in the target holder 8T after the completion of the retrieval work for the target holder 8T in the retrieval work section 3, and the post-work loading process cannot be executed. In this case, a process may be performed to cause the transport apparatus 4 to unload an article holder 8 holding articles 9 of the same type as those of the target holder 8T from the second storeroom 2 and transport the unloaded article holder 8 to the first storeroom 1.
(8) Note that the configuration disclosed in the above embodiment can also be applied in combination with configurations disclosed in other embodiments as long as no contradiction arises. Regarding other configurations as well, the embodiment disclosed herein is merely an example in all respects. Accordingly, various modifications can be made, as appropriate, without departing from the gist of the present invention.

A summary of the above-described article storage facility is described below.

An article storage facility includes:
a first storeroom in which a plurality of article holders are storable, each of the article holders being capable of holding a plurality of articles;
a second storeroom in which a plurality of article holders are storable, the second storeroom having a lower degree of automation than the first storeroom;
a retrieval work section for retrieval work to be performed, the retrieval work being work of retrieving an ordered number of the articles of an ordered type from corresponding one or more of the plurality of article holders, the ordered type being an article type specified by order information, the ordered number being the number of articles of the ordered type and specified by the order information;
a transport apparatus configured to transport the plurality of article holders between the first storeroom and the retrieval work section and between the second storeroom and the retrieval work section; and
a control system configured to control the first storeroom, the second storeroom, and the transport apparatus, based on the order information,
wherein each of the plurality of article holders is configured to hold a single type of the articles,
the first storeroom includes a plurality of first housing sections capable of housing the article holders; the second storeroom includes a plurality of second housing sections capable of housing the article holders;
the number of the first housing sections is greater than or equal to a total number of target types, the target types being types of the articles to be stored in the first storeroom out of all types of the articles to be specified by the order information,
the number of the second housing sections is greater than the number of the first housing sections, and the control system is configured to execute an unloading process to cause, in response to accepting the order information, the transport apparatus to unload at least one of the article holders holding one or more of the articles of the ordered type from either the first storeroom or the second storeroom and transport the at least one of the article holders to the retrieval work section such that the first storeroom is given priority over the second storeroom.

According to this configuration, the article holders stored in the first storeroom are unloaded with priority in the unloading process. With this, the first storeroom having a higher degree of automation than the second storeroom can be operated with priority. The operational efficiency of the article storage facility can thus be increased.

Further, according to this configuration, the degree of automation in the second storeroom with a lower frequency of unloading article holders is lower than that of the first storeroom, and the number of second housing sections in the second storeroom is greater than the number of first housing sections in the first storeroom. This can keep the degree of automation in the entire article storage facility low while maintaining the operational efficiency of the article storage facility. Thus, the installation costs of the article storage facility can be kept low.

Here, it is preferable that the article storage facility further includes a third storeroom having a lower degree of automation than the second storeroom,
wherein a retrieval number per unit period of the articles of the target types is greater than or equal to a predetermined reference value, the retrieval number per unit period being the number of the articles retrieved per unit period in the retrieval work section,
the first storeroom stores one or more of the article holders holding the articles of the target types such that at least one first housing section corresponds to one of the target types, and
the third storeroom stores one or more of the article holders each holding the articles whose retrieval number per unit period is smaller than the reference value.

According to this configuration, it is possible to constantly secure the space in the first storeroom for storing the article holders of all target types whose retrieval number per unit period is greater than or equal to the reference value. This can increase the proportion of the articles of the ordered type specified by the order information that are unloaded from the first storeroom, which has a relatively high degree of automation, and transported to the retrieval work section. The operational efficiency of the article storage facility can thus be increased.

It is preferable that the number of the first housing sections is equal to a total number of the target types.

According to this configuration, the first storeroom can store one article holder for each target types. This can minimize the scale of the first storeroom while maintaining the operational efficiency of the article storage facility.

It is preferable that each of the plurality of the article holders is capable of holding up to a specific holdable number of the articles, the specific holdable number being predetermined for each article type, an adjustment number N (N is a natural number) increasing with a decrease in the specific holdable number and increasing with an increase in a retrieval number per unit period is defined for each of the target types, the retrieval number per unit period being the number of articles retrieved per unit period in the retrieval work section, and
the number of the first housing sections is equal to a number obtained by adding up the adjustment numbers N for all of the target types.

According to this configuration, an appropriate number of articles of each target type can be stored in the first storeroom. This can reduce the frequency of a situation in which the number of articles stored in the first storeroom is insufficient for the ordered number.

The technology according to the present invention can be used in an article storage facility that stores articles.

### REFERENCE SIGNS

- 1: First storeroom
- 2: Second storeroom
- 3: Retrieval work section
- 4: Transport apparatus
- 5: Third storeroom
- 6: Loading section
- 8: Article holder
- 8E: Empty holder
- 8I: Loaded holder
- 8T: Target holder
- 9: Article
- 10: Control system
- 11: Storage system
- 12: First storage rack
- 12a: First housing section
- 13: Stacker crane
- 13a: Travel rail
- 14: Loading/unloading conveyor
- 21: Second storage rack
- 21a: Second housing section
- 22: Fixed rack
- 23: Mobile rack
- 31: First work section
- 32: Second work section
- 33: Third work section
- 34: Empty holder storage section
- 41: Circulating transport carriages
- 41a: Circulating rail
- 42: First transport carriage
- 42a: First rail
- 43: First connecting conveyor
- 44: First lift device
- 45: Second transport carriage
- 45a: Second rail
- 46: Second connecting conveyor
- 47: Second lift device
- 48: Third lift device
- 51: Placement section
- 100: Article storage facility
- 311: Layer depalletizer
- 312: First sorting conveyor
- 313: First empty holder storage section
- 321: First picking conveyor
- 322: Picking robot
- 323: Second sorting conveyor
- 324: Second empty holder storage section
- 331: Second picking conveyor
- 332: Third sorting conveyor
- 333: Third empty holder storage section

- A: Article type
- B: Article type
- C: Article type
- A1: Travel path
- B1: Building
- F: Forklift
- W: Worker

- #1 - #11: Process steps

## Claims

1. An article storage facility (100) comprising:
a first storeroom (1) in which a plurality of article holders (8) are storable, each of the article holders (8) being capable of holding a plurality of articles (9);
a second storeroom (2) in which the plurality of article holders (8) are storable, the second storeroom (2) having a lower degree of automation than the first storeroom (1);
a retrieval work section (3) for retrieval work to be performed, the retrieval work being work of retrieving an ordered number of the articles (9) of an ordered type from corresponding one or
more of the plurality of article holders (8), the ordered type being an article type specified by order information, the ordered number being the number of articles (9) of the ordered type and
specified by the order information;
a transport apparatus (4) configured to transport the plurality of article holders (8) between the first storeroom (1) and the retrieval work section (3) and between the second storeroom (2) and
the retrieval work section (3); and
a control system (10) configured to control the first storeroom (1), the second storeroom (2),
and the transport apparatus (4), based on the order information,
wherein each of the plurality of article holders (8) is configured to hold a single type of the articles (9),
the first storeroom (1) includes a plurality of first housing sections (12a) capable of housing the article holders (8);
the second storeroom (2) includes a plurality of second housing sections (21a) capable of housing the article holders (8);
the number of the first housing sections (12a) is greater than or equal to a total number of target types, the target types being types of the articles (9) to be stored in the first storeroom (1) out of all types of the articles (9) to be specified by the order information,
the number of the second housing sections (21a) is greater than the number of the first housing sections (12a), and
the control system (10) is configured to execute an unloading process to cause, in response to accepting the order information, the transport apparatus (4) to unload at least one of the article holders (8) holding one or more of the articles (9) of the ordered type from either the first storeroom (1) or the second storeroom (2) and transport the at least one of the article holders (8) to the retrieval work section (3) such that the first storeroom (1) is given priority over the second storeroom (2).

2. The article storage facility (100) according to claim 1, further comprising:
a third storeroom (5) having a lower degree of automation than the second storeroom (2),
wherein a retrieval number per unit period of the articles (9) of the target types is greater than or equal to a predetermined reference value, the retrieval number per unit period being the number of the articles (9) retrieved per unit period in the retrieval work section (3),
the first storeroom (1) stores one or more of the article holders (8) holding the articles (9) of the target types such that at least one first housing section (12a) corresponds to one of the target types, and
the third storeroom (5) stores one or more of the article holders (8) each holding the articles (9) whose retrieval number per unit period is smaller than the reference value.

3. The article storage facility (100) according to claim 1,
wherein the number of the first housing sections (12a) is equal to a total number of the target types.

4. The article storage facility (100) according to claim 1,
wherein each of the plurality of the article holders (8) is capable of holding up to a specific holdable number of the articles (9), the specific holdable number being predetermined for each article type,
an adjustment number N (N is a natural number) increasing with a decrease in the specific holdable number and increasing with an increase in a retrieval number per unit period is defined for each of the target types, the retrieval number per unit period being the number of articles (9) retrieved per unit period in the retrieval work section (3), and
the number of the first housing sections (12a) is equal to a number obtained by adding up the adjustment numbers N for all of the target types.
